(19) Europäisches Patentamt
European Patent Office
Office européen des brevets

(11) **EP 3 174 775 B1**

(12) **FASCICULE DE BREVET EUROPEEN**

(45) Date de publication et mention de la délivrance du brevet:
**04.09.2019 Bulletin 2019/36**

(21) Numéro de dépôt: **15742382.3**

(22) Date de dépôt: **07.07.2015**

(51) Int Cl.:
***B62D 15/02*** *(2006.01)*

(86) Numéro de dépôt international:
**PCT/FR2015/051873**

(87) Numéro de publication internationale:
**WO 2016/016533 (04.02.2016 Gazette 2016/05)**

(54) **PROCÉDÉ DE RÉGÉNÉRATION DE TRAJECTOIRE POUR UNE MANOEUVRE DE PARKING AUTOMATIQUE**

VERFAHREN ZUR REGENERIERUNG EINES WEGES FÜR EINEN AUTOMATISCHEN EINPARKVORGANG

METHOD FOR REGENERATING A PATH FOR AN AUTOMATIC PARKING MANEUVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2014 FR 1457532**

(43) Date de publication de la demande:
**07.06.2017 Bulletin 2017/23**

(73) Titulaire: **Renault S.A.S.**
**92100 Boulogne-Billancourt (FR)**

(72) Inventeurs:
- **VOROBIEVA, Hélène**
  **92210 Saint Cloud (FR)**
- **MINOIU-ENACHE, Nicoleta**
  **78000 Versailles (FR)**
- **GLASER, Sébastien**
  **78330 Fontenay le Fleury (FR)**

(56) Documents cités:
EP-A1- 1 462 312          EP-A2- 0 835 796
EP-A2- 2 199 188          EP-A2- 2 202 132
DE-A1-102009 027 289      US-A1- 2013 085 637

**Description**

L'invention concerne un procédé pour régénérer une trajectoire lors d'une manoeuvre de parking automatique réalisée par un véhicule automobile.

De nos jours, les places de parking sont devenues étroites dans les grandes villes. Pour se garer dans de tels endroits, l'utilisateur d'un véhicule automobile doit faire preuve de beaucoup d'expérience et d'attention. Ainsi, pendant une manoeuvre de parking, le véhicule automobile peut être abimé par de légères griffures. De plus, alors que, dans les grandes villes, le trafic est très difficile, l'utilisateur entravera encore plus la circulation s'il ne réussit pas son début de manoeuvre de parking correctement et doit se replacer plusieurs fois au point de départ de la manoeuvre. La manoeuvre de parking dans de tels endroits amène donc, non seulement à des petits dégâts matériels, mais également à un stress de l'utilisateur car il entrave la circulation. Il y a donc une nécessité à ce que le véhicule automobile prenne en charge la manoeuvre de parking et se gare automatiquement, afin d'améliorer le confort et la sécurité de l'utilisateur ainsi que le temps nécessaire pour se garer. Au surplus, il peut être intéressant que, lorsque cela est possible (autorisation pour le véhicule équipé de se déplacer sans passager), l'utilisateur puisse laisser son véhicule à l'entrée d'un parking ou à côté d'une place et que le véhicule aille se garer tout seul. Cette possibilité est d'autant plus intéressante pour des véhicules libre-service.

Pour qu'un véhicule automobile se gare automatiquement, il a besoin d'être équipé avec des dispositifs de perception de son environnement et de déplacement autonome et de disposer d'une trajectoire qu'il va suivre et qui va le mener dans la place de parking. Cette trajectoire doit prendre en compte les contraintes du véhicule en lui-même (par exemple : dimensions du véhicule, angles de braquage maximaux) et les contraintes de l'environnement (par exemple : dimensions de la place de parking, position des autres véhicules situés autour de la place de parking afin d'éviter les collisions lors des manoeuvres).

Il existe, actuellement, différentes méthodes pour générer une trajectoire de manoeuvre de parking Ces méthodes peuvent être divisées en deux groupes : les méthodes dites géométriques et les méthodes avec courbure continue.

Les méthodes géométriques utilisent des équations géométriques simples et créent des trajectoires basées sur des arcs de cercle admissible (c'est-à-dire de rayon supérieur ou égal au rayon minimal de braquage du véhicule) qui mènent le véhicule jusqu'à la place de parking. Une des approches est basée sur la sortie fictive du véhicule de la place de parking, puis sur l'inversion de la trajectoire ainsi formée. Cette approche est particulièrement instinctive et nécessite peu de puissance de calcul embarquée sur le véhicule. Néanmoins, la courbure de ce type de trajectoire est discontinue : le véhicule doit s'arrêter pour réorienter ses roues directionnelles. Ceci demande des efforts importants à la colonne de direction, produit une usure plus rapide des pneus et induit possiblement un temps plus long de manoeuvre de parking.

Les méthodes à courbure continue (c'est-à-dire que le véhicule peut réorienter ses roues en déplacement) ne présentent pas ces problèmes. Néanmoins ces méthodes, lorsqu'elles sont utilisées pour le problème de la manoeuvre de parking, ont souvent besoin d'optimisations de la trajectoire créée initialement et qui n'ont pas, elles, une courbure continue. Ceci présente un haut coût de calcul. De plus, la convergence vers une solution correcte n'est pas toujours garantie.

Certaines méthodes réduisent la complexité de calcul, tout en garantissant la création sans optimisation d'une trajectoire correcte avec courbure continue. Ces méthodes combinent les méthodes géométriques aux clothoïdes. Une clothoïde est une courbe dont la courbure $\kappa=1/R$ varie linéairement avec sa longueur L. Une clothoïde est communément définie par son paramètre A tel que $A^2=RL$. Avec cette courbe, des commandes de braquage et de vitesse simples en boucle ouverte sont suffisantes pour que le véhicule exécute la trajectoire ainsi générée.

Un exemple de telles méthodes est présenté dans le document US 2007/0282503 qui traite d'une stratégie de manoeuvre de parking avec une pose initiale du véhicule en dehors de la place de parking.

Néanmoins, cette méthode avec des commandes en boucle ouverte ne permet pas de corriger les erreurs pouvant survenir durant des manoeuvres de parking nécessitant plusieurs manoeuvres. Le même problème survient également lors de l'utilisation de méthodes géométriques avec arcs de cercle.

Par exemple le document US2013/0085637, qui est considéré comme l'art antérieur le plus proche selon le préambule de la revendication 1, divulgue une méthode et un appareil pour assister un conducteur de véhicule à moteur quand il se gare sur un emplacement de parking.

De ce fait, une fois la génération de la trajectoire faite, il n'est pas sûr que le véhicule automobile la suive sans déviations. Ainsi, pendant la manoeuvre de parking, il y a donc une nécessité de pouvoir effectuer des corrections ou des régénérations de trajectoires en cours de manoeuvre de parking d'un véhicule automobile.

Un but de l'invention est de fournir un procédé de régénération d'une trajectoire en cours de manoeuvre de parking d'un véhicule automobile.

A cet effet, il est prévu, selon l'invention un procédé selon la revendication 1.

Avantageusement, mais facultativement, le procédé selon l'invention présente au moins l'une des caractéristiques techniques supplémentaires selon l'une des revendications dépendantes.

D'autres avantages et caractéristiques de l'invention apparaitront lors de la description ci-après, d'un mode de réalisation ainsi que de variantes. Aux dessins annexés :

- La figure 1 illustre un exemple de mise en oeuvre d'un procédé de régénération d'une trajectoire selon l'invention ;
- La figure 2 illustre une séquence clothoïdale pour le calcul d'une trajectoire ;
- La figure 3 illustre des chemins bi-élémentaires ;
- La figure 4 illustre un changement de repère pour les chemins bi-élémentaires ;
- La figure 5 illustre les notions de poses symétriques et de poses non symétriques ;
- La figure 6 illustre des cas où qA et qB sont deux poses non-symétriques de même orientation ou d'orientations différentes ;
- La figure 7 illustre une solution avec des arcs de cercles ; et
- La figure 8 illustre des exemples de tableaux de variation pour trouver l'intervalle $[\lambda_1, \lambda_2]$

Nous allons maintenant décrire un procédé de régénération d'une trajectoire lors d'une manoeuvre de parking selon l'invention.

Le procédé de régénération d'une trajectoire lors d'une manoeuvre de parking selon l'invention recalcule (ou régénère) une trajectoire d'une sous manoeuvre de parking à venir si les erreurs accumulées lors de sous-manoeuvres précédentes sont trop importantes. Il est donc considéré que la place de parking a été identifiée comme acceptable pour garer le véhicule et qu'une trajectoire initiale a été déterminée.

La trajectoire initiale est générée selon la méthode décrite dans l'article « H. Vorobieva, N. Minoiu-Enache, S. Glaser, S. Mammar, "Geometric Continuous-Curvature Path Planning for Automatic Parallel Parking", Proc. of IEEE ICNSC, 2013, pp. 418-423», auquel il est possible de se référer pour de plus amples informations. C'est une méthode en boucle ouverte.

Comme la commande de braquage ne dépend que de la distance parcourue par le véhicule automobile et de paramètres pré-calculés, les erreurs dues à cette méthode en boucle ouverte vont être corrigées par le procédé de régénération d'une trajectoire selon l'invention.

A chaque fois que le véhicule s'arrête (par exemple lors de la fin d'une des sous manoeuvres ou à cause d'un arrêt d'urgence dû par exemple à un obstacle), la position du véhicule est estimée et comparée à la position calculée lors de la planification de la trajectoire initiale. Si l'erreur est trop grande ou dangereuse pour les manoeuvres suivantes, le procédé de régénération d'une trajectoire selon l'invention est alors mis en oeuvre. Néanmoins, si la pose courante (position et orientation) du véhicule est suffisamment correcte pour être considérée comme position finale de la manoeuvre de parking, ladite manoeuvre de parking est considérée comme terminée et plus aucune autre manoeuvre supplémentaire n'est effectuée.

Le procédé de régénération d'une trajectoire selon l'invention doit répondre aux mêmes contraintes que la planification initiale de trajectoire : c'est-à-dire satisfaire les contraintes géométriques et avoir un coût faible de calcul. Dans l'une des variantes de réalisation du procédé de régénération d'une trajectoire selon l'invention, la nouvelle trajectoire doit avoir une courbure continue. Dans une autre mode de réalisation, la nouvelle trajectoire doit si possible avoir une courbure continue, sinon une courbure discontinue, avec braquage des roues directionnelles à l'arrêt, est autorisée.

Dans un mode de réalisation, le procédé de régénération d'une trajectoire selon l'invention se base sur la méthode géométrique inversée. Dans ce cas, il n'y a pas besoin de recalculer l'ensemble de la trajectoire, étant donné que la méthode de sortie de parking ne change pas et a servi à déterminer la trajectoire initiale. De ce fait, sur l'ensemble de la manoeuvre de parking, il suffit de recalculer ou régénérer la sous manoeuvre que le véhicule aurait dû effectuer juste après son arrêt dans la pose courante. Le procédé de régénération d'une trajectoire selon l'invention est donc réduit à régénérer une trajectoire de la pose réelle du véhicule engagé dans la place de parking, à la prochaine pose calculée lors de la planification initiale de trajectoire.

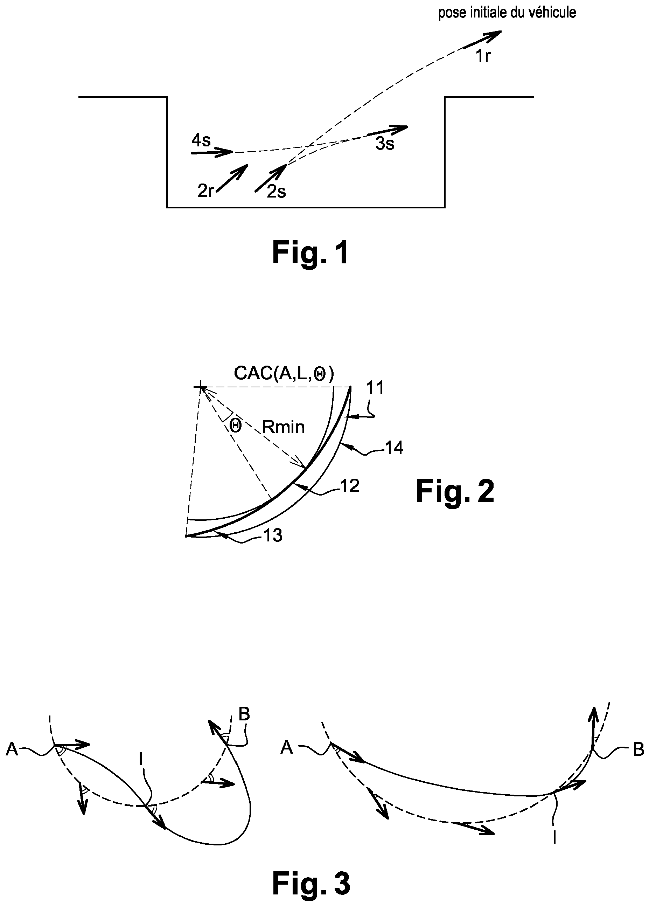

Par exemple, pour une manoeuvre de parking en trois sous manoeuvres tel que présentée sur la figure 1, le calcul d'une trajectoire initiale a commencé en la pose finale souhaitée 4s. Puis, la deuxième pose intermédiaire souhaitée 3s a été trouvée avec la trajectoire à suivre entre la pose finale 4s et la deuxième pose intermédiaire 3s. Puis, la première pose intermédiaire souhaitée 2s a été trouvée avec la trajectoire à suivre entre les deuxième 3s et première 2s poses intermédiaires. Puis, une trajectoire a été trouvée pour relier la première pose intermédiaire 2s à la pose initiale réelle 1r du véhicule automobile. Lors d'un parcours de cette trajectoire initiale en sens inverse (depuis 1r vers 2s, puis vers 3s, puis vers 4s), le véhicule automobile a atteint une première pose intermédiaire réelle 2r, avec une erreur trop grande par rapport à la première pose intermédiaire 2s souhaitée initialement. Le procédé de régénération d'une trajectoire selon l'invention permet alors de trouver une trajectoire entre la première pose intermédiaire réelle 2r et la deuxième pose intermédiaire souhaitée 3s. La trajectoire entre la deuxième pose intermédiaire souhaitée 3s et la pose finale souhaitée 4s n'a alors pas besoin d'être recalculée.

Afin d'effectuer le calcul d'une trajectoire entre une pose intermédiaire réelle en cours du véhicule et la pose intermédiaire souhaitée suivante, le procédé de régénération d'une trajectoire selon l'invention met en oeuvre au moins l'une des variantes suivantes :

- Détermination d'une trajectoire avec courbure continue uniquement (solution n°1)
- Détermination d'une trajectoire avec arcs de cercle uniquement (solution n°2)
- Détermination d'une trajectoire alliant des courbures continues de préférence et des arcs de cercles sinon (mixte des solutions n°1 et n°2 précédentes)

Une mise en oeuvre du procédé de régénération d'une trajectoire selon l'invention dans un véhicule automobile présuppose les éléments suivants :

- Le véhicule comporte un système avec deux roues directrices avant
- Le véhicule comporte un système de commande automatique du braquage des roues directrices
- Le véhicule comporte un système de commande automatique de l'accélération et des freins
- Le véhicule comporte un système de commande automatique de levier de vitesse ou de boite de vitesse pour changer la direction d'avancement du véhicule
- Le véhicule comprend un ou plusieurs capteurs permettant de mesurer des distances depuis l'avant, l'arrière et des 4 coins du véhicule jusqu'à un obstacle le plus proche (par exemple : un mur, un véhicule présent autour de la place de parking considérée) ; ces capteurs peuvent être une caméra, un capteur ultra-son, un télémètre laser ou tout autre capteur de distance.

Nous allons maintenant détailler les différentes variantes du procédé de régénération d'une trajectoire selon l'invention.

### 1 Notations

En remarque liminaire, nous présentons ci-après les différentes notations qui vont être utilisées dans la suite de la description.

A : paramètre de la clothoïde
R : rayon
L : longueur
$\kappa$ : courbure
$\theta$ : angle d'un arc de cercle
$qA=(x,y, \varphi)$ : pose du véhicule automobile en un point A de coordonnées x et y et d'orientation $\varphi$
$R_{min}$ : rayon minimal de braquage admissible pour le véhicule automobile considéré
a : empattement du véhicule automobile
$\delta$ : angle de braquage des roues directionnelles

### 2 Etude préliminaire sur les trajectoires de parking

Dans cette partie, nous allons présenter les principes généraux de calcul d'une trajectoire d'une manoeuvre de parking. Cette trajectoire est géométrique avec inversion de la sortie de la place de parking considérée, avec création d'une trajectoire avec arcs de cercle ou avec courbure continue. Ces principes de calculs sont connus de la personne de l'art, voir par exemple l'article « H. Vorobieva, N. Minoiu-Enache, S. Glaser, S. Mammar "Geometric Continuous-Curvature Path Planning for Automatic Parallel Parking", Proc. of IEEE ICNSC, 2013, pp. 418-423» auquel il est possible de se référer pour de plus amples informations.

Cette partie présente, entre autre, des notions qui seront réutilisées dans la suite de la description afin de permettre une meilleure compréhension du procédé de régénération d'une trajectoire selon l'invention qui va être décrite.

Il est à noter que le procédé de régénération d'une trajectoire selon l'invention peut être utilisé également pour des systèmes de calcul d'une trajectoire initiale de manoeuvre de parking utilisant un procédé de génération de manoeuvre de parking initiale différente de celle présentée dans cette partie.

Pour le calcul d'une trajectoire initiale de manoeuvre de parking géométrique avec inversion de la trajectoire de sortie, la planification de la trajectoire initiale consiste en deux étapes. D'abord, une trajectoire admissible géométrique est créé avec la méthode inversée : le véhicule automobile est considéré fictivement comme étant dans la place de parking et une trajectoire de sortie, composée d'arcs de cercle représentant des marches avant et des marches arrières, est définie, puis inversée. Lorsqu'une marche avant permet au véhicule automobile de sortir sans collision, les deux derniers arcs de cercle connectant la pose réelle du véhicule automobile à la pose précédemment trouvée calculés. Par exemple, pour une longueur de la place de parking permettant un parking en 3 manoeuvres, le véhicule est considéré dans position finale souhaitée 4f, figure 1. Puis une marche avant permet de déterminer la position intermédiaire souhaitée 3s. Puis une marche arrière permet de déterminer la position intermédiaire souhaitée 2s. La marche avant suivante permettant de sortir sans collision, les deux derniers arcs de cercle connectant la pose réelle 1r du véhicule automobile à la pose 2s sont calculés.

S'il est souhaité que la trajectoire initiale soit à courbure continue, une deuxième étape est à réaliser. Lors de cette étape, chaque arc de cercle 14 de la première étape est transformé en une séquence clothoïdal CAC(A,L,θ) définie par (cf figure 2) :

1) une première clothoïde 11 de paramètre A, de longueur L, de courbure initiale nulle et de courbure finale égale à 1/R (avec R supérieur ou égal à $R_{min}$, rayon minimal admissible de braquage)
2) un arc de cercle 12 optionnel de rayon R et d'angle θ
3) une deuxième clothoïde 13 de paramètre A, de longueur L, de courbure initiale égale à 1/R et de courbure finale nulle

### 3 Procédé de Régénération d'une trajectoire

Nous allons maintenant décrire plus en détail le procédé de régénération d'une trajectoire selon l'invention, plus particulièrement selon les variantes préalablement dénommées solution n°1 et solution n°2.

### 3.1 Solution n°1 avec courbure continue

Afin de garder un contrôle du braquage simple (présenté au point 4 ci-après), cette solution n°1 utilise les clothoïdes. Nous définissons un chemin élémentaire comme l'équivalent d'une séquence CAC sans l'arc de cercle optionnel et un chemin bi-élémentaire comme composé de deux séquences CAC sans l'arc de cercle optionnel. Ainsi, si les deux poses A et B du véhicule à relier sont dites symétriques, un chemin élémentaire est déterminé pour les relier. Sinon, un chemin bi-élémentaire (voir Figure 3) est utilisé pour relier les deux poses A et B du véhicule grâce à une pose intermédiaire I, symétrique à la fois à la pose initiale A et à la pose finale B du véhicule.

### a) Calculs liés aux chemins bi-élémentaires

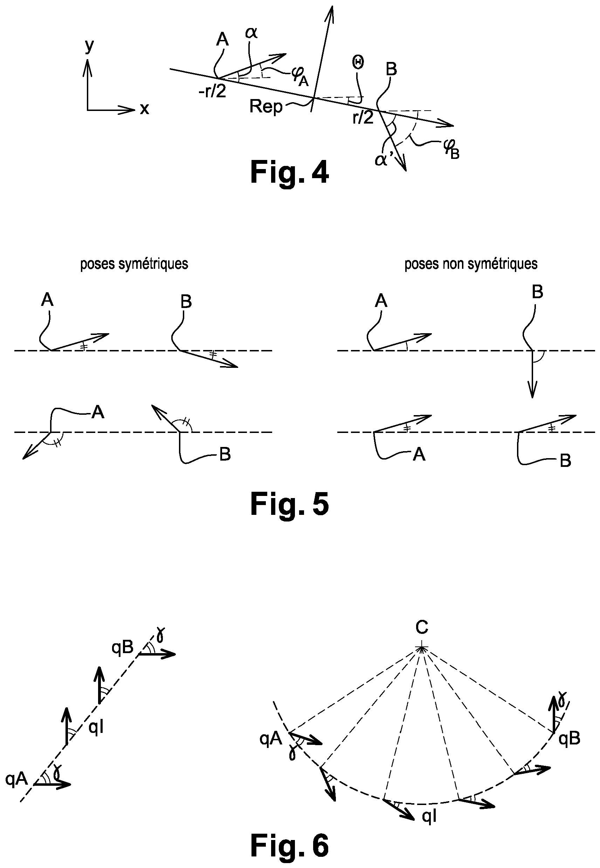

- Soit A et B deux positions du véhicule et qA et qB leur poses (x,y,φ) respectives dans un repère global (voir Figure 4). Nous travaillons dans un repère Rep défini comme étant centré sur le milieu du segment [AB], tel que ce segment soit situé sur l'axe des abscisses et tel que, dans ce repère Rep, qA=(-r/2,0,α) et qB=(r/2,0,α') avec r la distance entre les points A et B, α=φA-θ et α'=φB-θ où θ est l'orientation du nouveau repère Rep par rapport au repère global.

Nous posons également :

$$\beta = (\alpha' - \alpha) / 2.$$

Il est défini que deux configurations qA et qB sont dites symétriques si et seulement si (voir Figure 5) :

$$(xB - xA)\sin(\frac{\phi B + \phi A}{2}) = (yB - yA)\cos(\frac{\phi B + \phi A}{2})$$

- Si A et B sont des poses symétriques, il est possible d'effectuer directement une séquence CAC (sans l'arc de cercle optionnel) grâce aux formules précisées par la suite. Sinon, une configuration intermédiaire est utilisée.
- Supposons que A et B ne sont pas des poses symétriques, les poses à la fois symétriques à qA et qB sont une courbe contenant A et B et étant de courbure constante κ=2sin(β)/r. Cette courbe est soit une ligne droite (qui, par la suite, est approximée à un cercle de rayon infini ou, formulé autrement, un cercle de courbure nulle), soit un cercle de centre C de coordonnées (sin(|β|)/κ-r/2 ; cos(β)/r) si α>α', sinon de coordonnées (sin(|β|)/κ-r/2 ; -cos(β)/r), et de rayon R=1/κ (voir Fig. 6). Il est alors possible de définir des configurations intermédiaires par, s étant la longueur sur la courbe des positons :

$$qI(\kappa,s) = \begin{cases} xI(\kappa,s) = \sin(\kappa s)/\kappa \\ yI(\kappa,s) = (\cos(\beta) - \cos(\kappa s))/\kappa \\ \theta I(\kappa,s) = \kappa s - (\alpha + \alpha')/2 \end{cases}$$

Et, donc, nous avons alors dans le cas de la ligne droite :

$$qI(0,s) = \begin{cases} xI(0,s) = s \\ yI(0,s) = 0 \\ \theta I(0,s) = -\alpha \end{cases}$$

L'angle entre une tangente à la courbe en respectivement A et B, par rapport aux poses qA et qB est $\gamma=|\alpha+\alpha'|/2$ et l'angle entre une tangente à la courbe en I par rapport à la pose qI est alors de $-\gamma$.

■ Afin de définir les paramètres d'une séquence CAC(A,L,0) reliant deux poses symétriques qA et qB (à remplacer par qA et qI puis par qI et qB si qA et qB ne sont pas symétriques, et dans ce cas redéfinir pour chaque paire de poses, de la même façon, r et $\beta$), nous avons les formules suivantes :

$$A = \sqrt{1/\sigma}$$

$$L = \sqrt{2\beta/\sigma}$$

Avec

$$\sigma = \frac{4\pi\left(\cos(\beta)C_f(\sqrt{2\beta/\pi}) + \sin(\beta)S_f(\sqrt{2\beta/\pi})\right)^2}{r^2}$$

Où $C_f$ et $S_f$ sont les intégrales de Fresnel :

$$C_f(x) = \int_0^x \cos\tfrac{\pi}{2}u^2\, du$$

$$S_f(x) = \int_0^x \sin\tfrac{\pi}{2}u^2\, du$$

### b) Stratégie pour la régénération de la trajectoire

Etant donné le véhicule dans une pose qA et étant donné une pose qB que le véhicule souhaite rejoindre, nous créons une séquence CAC (si les poses sont symétriques) ou un chemin bi-élémentaire (si les poses ne sont pas symétriques) en utilisant les formules ci-dessus qui viennent d'être présentées.

Dans le cas où les poses sont symétriques, nous devons vérifier que la séquence CAC ainsi crée est admissible pour le véhicule et est sans collision. Pour cela, nous vérifions que la trajectoire créée ne nécessite pas un braquage qui dépasse les capacités du véhicule, c'est-à-dire $A_{AB}^2/L_{AB} \geq R_{min}$, et que la trajectoire trouvée ne crée pas de collisions avec un obstacle. Si ce n'est pas le cas, le procédé de régénération d'une trajectoire selon l'invention passe à une solution présentée dans le point suivant 3.2, si une stratégie avec arcs de cercles est autorisée. Sinon, le procédé de régénération d'une trajectoire selon l'invention passe à une solution présentée ultérieurement au point 3.3.c).

Dans le cas où les poses qA et qB ne sont pas symétriques, tout un ensemble de poses intermédiaires qI est disponible. Le procédé de régénération d'une trajectoire selon l'invention détermine, dans cet ensemble de poses intermédiaires, une pose qI admissible, c'est-à-dire telle que les braquages demandés sont inférieurs au maximum possible du véhicule sur les deux segments, de A à I et de I à B, c'est-à-dire $A_{AI}^2/L_{AI} \geq R_{min}$ et $A_{IB}^2/L_{IB} \geq R_{min}$. En effet, l'utilisation des intégrales de Fresnel étant très gourmande en temps de calcul, toutes les poses ne peuvent donc pas être vérifiées sur la satisfaction de cette contrainte.

Les études de variation des fonctions impliquées nous donnent les propriétés suivantes :

- Soit P le point d'intersection de la droite contenant la pose qA avec le cercle de centre C et de rayon R.
- Lorsque le point I parcourt l'arc entre A et B, lorsqu'il se rapproche du point P, le rayon de braquage demandé pour le premier segment augmente, c'est à dire que $A_{AI}^2/L_{AI}$ augmente. Lorsqu'il s'éloigne du point P vers le point B, le rayon de braquage demandé pour le premier segment diminue, c'est à dire que $A_{AI}^2/L_{AI}$ diminue. Il est à noter que, si P n'est pas situé sur l'arc entre A et B, lorsque I va de A vers B, le rayon de braquage demandé pour le premier segment augmente.
- Lorsque le point I parcourt l'arc entre A et B, lorsqu'il se rapproche de B, le rayon de braquage pour le deuxième segment diminue, c'est-à-dire $A_{IB}^2/L_{IB}$ diminue.

Ces variations permettent de procéder par dichotomie pour trouver une pose qI admissible. Dans le cas où P n'est pas sur l'arc entre A et B, le procédé de régénération d'une trajectoire selon l'invention effectue la dichotomie sur l'arc entre A et B. Dans le cas où P est sur l'arc entre A et B, le procédé de régénération d'une trajectoire selon l'invention effectue la dichotomie sur l'arc entre A et P.

Les conditions d'arrêt de l'algorithme sont :

- Une pose qI admissible est trouvée, ou
- Une pose qI telle que $A_{AI}^2/L_{AI}<R_{min}$ et $A_{IB}^2/L_{IB}<R_{min}$ est trouvée. Dans ce cas, il n'existe pas de pose qI admissible comme conséquence de la propriété énoncée précédemment, ou
- Un nombre N d'itérations est dépassé, N étant prédéfini. Dans ce cas, il est considéré qu'il n'existe pas de pose admissible.

Si une pose admissible est trouvée, le procédé de régénération d'une trajectoire selon l'invention vérifie que la trajectoire ainsi crée ne crée pas de collision. Si c'est le cas, le problème est résolu.

Dans le cas où il n'existe pas de pose admissible ou que la pose admissible trouvée ne crée pas une trajectoire libre d'obstacles, le procédé de régénération d'une trajectoire selon l'invention passe à la solution présentée au point 3.2 si la stratégie avec arcs de cercles est autorisée. Sinon, le procédé de régénération d'une trajectoire selon l'invention passe à la solution présentée au point 3.3.c).

### *3.2 Solution avec arcs de cercle*

- De la même manière qu'au point 3.1, soit les poses qA et qB sont symétriques et, dans ce cas-là, le procédé de régénération d'une trajectoire selon l'invention trouve l'arc de cercle qui les relie (comme expliqué ci-dessous), soit il est possible de trouver un ensemble de configurations intermédiaires symétriques à la fois à qA et qB (voir Figure 3). En reprenant les mêmes notations que dans la partie précédente, ces configurations intermédiaires s'écrivent de la même manière :

$$q_I(\kappa, s) = \begin{cases} x_I(\kappa, s) = \sin(\kappa s)/\kappa \\ y_I(\kappa, s) = (\cos(\beta) - \cos(\kappa s))/\kappa \\ \theta_I(\kappa, s) = \kappa s - (\alpha + \alpha')/2 \end{cases}$$

Et donc nous avons dans le cas de la ligne droite :

$$q_I(0, s) = \begin{cases} x_I(0, s) = s \\ y_I(0, s) = 0 \\ \theta_I(0, s) = -\alpha \end{cases}$$

Il est immédiat de trouver un arc de cercle reliant deux poses symétriques : l'intersection des droites perpendiculaires (normales) aux poses (les droites passant par les poses sont tangentes au cercle) donne le centre du cercle et le rayon peut alors être déduit.

- Dans le cas où les poses qA et qB ne sont pas symétriques, tout un ensemble de poses qI est disponible sur l'arc de cercle reliant les deux poses. Le procédé de régénération d'une trajectoire selon l'invention détermine alors l'ensemble de poses qI, s'il existe, admissibles pour le véhicule (c'est-à-dire tel que les arcs de cercle créés entre qA et qI et entre qI et qB aient un rayon supérieur ou égal à $R_{min}$).

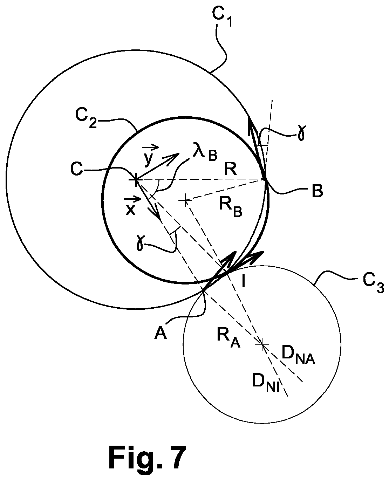

- Pour trouver cet ensemble, nous nous plaçons dans un nouveau repère, de centre C et dont l'axe des abscisses est $\overrightarrow{CA}$ (voir figure 7). Toutes les coordonnées sont exprimées en fonction de $\lambda$ : l'angle $A\hat{C}I$. Les coordonnées des points A, B et I sont exprimées dans ce repère comme suit :

$$A\begin{cases} x_A = R\cos(\lambda_A) = R \\ y_A = R\sin(\lambda_A) = 0 \end{cases}, \quad B\begin{cases} x_B = R\cos(\lambda_B) \\ y_B = R\sin(\lambda_B) \end{cases}, \quad I\begin{cases} x_I = R\cos(\lambda) \\ y_I = R\sin(\lambda) \end{cases}, \quad \texttt{avec}$$

$$\lambda_B = a\cos\left(1 - \frac{r^2}{2R^2}\right), \quad \lambda_A = 0 \, \texttt{et} \quad \lambda \in \left]\lambda_A, \lambda_B\right[$$

Il est alors possible d'exprimer les équations des droites normales aux poses qA, qB et qI par :

$$D_{NA}(\tau_A)\begin{cases} x_{DNA} = R\big(\cos(\lambda_A) - \cos(\lambda_A + \gamma)\tau_A\big) \\ y_{DNA} = R\big(\sin(\lambda_A) - \sin(\lambda_A + \gamma)\tau_A\big) \end{cases}$$

$$D_{NB}(\tau_B)\begin{cases} x_{DNB} = R\big(\cos(\lambda_B) - \cos(\lambda_B + \gamma)\tau_B\big) \\ y_{DNB} = R\big(\sin(\lambda_B) - \sin(\lambda_B + \gamma)\tau_B\big) \end{cases}$$

$$D_{NI}(\tau)\begin{cases} x_{DNI} = R\big(\cos(\lambda) - \cos(\lambda - \gamma)\tau\big) \\ y_{DNI} = R\big(\sin(\lambda) - \sin(\lambda - \gamma)\tau\big) \end{cases}$$

Cela est illustré en figure 7

Par la suite, comme les formules à appliquer pour les calculs concernant respectivement les couples (A,I) et (B,I) sont de la même forme, tout est écrit en fonction de X avec X à remplacer respectivement par A ou B.

- Nous calculons alors le centre $C_{XI}$ du cercle reliant X et I par l'intersection de $D_{NX}$ et $D_{NI}$ et le rayon $R_X$ associé. Pour cela on écrit $D_{NX}(\tau_X)=D_{NI}(\tau)$, ce qui nous donne deux équation à deux inconnues $\tau_X$ et $\tau$. Nous obtenons alors facilement $\tau$ :

$$\tau(\lambda) = \frac{\sin(\lambda_X) + N_X\big(\cos(\lambda) - \cos(\lambda_X) - \sin(\lambda)\big)}{N_X\cos(\lambda - \gamma) - \sin(\lambda - \gamma)} \quad\quad \texttt{Avec} \quad N_X = \tan(\lambda_X + \gamma)$$

Or nous avons $R_X = R|\tau|$ et nous cherchons un ensemble de rayons $R_X$ tels que $R_X \geq R_{min}$.
Il suffit alors de calculer les solutions de l'équation (1) $R\tau - R_{min} = 0$ et de l'équation (2) $R\tau + R_{min} = 0$ ainsi que de connaitre les variations de $R_X$ en fonction de $\lambda$.

- En procédant par <u>implications</u>, nous trouvons deux solutions pour l'équation (1) :

$$\lambda = 2a\tan\left(\frac{-c \pm \sqrt{c^2 - a^2 + b^2}}{a - b}\right)$$

Avec $a = R(\sin(\lambda_X)- N_X \cos(\lambda_X))$, $b = N_X R - R_{min} N_X \cos(\gamma)- R_{min} \sin(\gamma)$ et $c = -R - R_{min} N_X \sin(\gamma) + R_{min} \cos(\gamma)$

Pour obtenir l'équivalence, nous testons ces deux solutions dans l'équation initiale (1) et nous retenons celle qui la vérifie (cela dépend des paramètres du véhicule, de sa pose courante qA et de la pose suivante à atteindre qB).

■ De même, en procédant par <u>implications</u>, nous trouvons deux solutions pour l'équation (2) :

$$\lambda = 2a\tan\left(\frac{-c \pm \sqrt{c^2 - a^2 + b^2}}{a - b}\right)$$

avec $a = R(\sin(\lambda_X)-N_X \cos(\lambda_X))$, $b = N_X R + R_{min} N_X \cos(\gamma) + R_{min} \sin(\gamma)$ et $c = -R + R_{min} N_X \sin(\gamma) - R_{min} \cos(\gamma)$

De nouveau, pour obtenir l'équivalence, nous testons ces deux solutions dans l'équation initiale (2) et nous retenons celle qui la vérifie (cela dépend des paramètres du véhicule, de sa pose courante qA et de la pose suivante à atteindre qB).

■ L'étude des variations des fonctions $R_A(\lambda)$ et $R_B(\lambda)$ nous donne les résultats suivants dans $]\lambda_A,\lambda_B[$ avec $]\lambda_A,\lambda_B[ \subset [0,2\pi[$

- $R_A(\lambda)$ est soit croissante si au maximum une solution parmi les solutions aux équations (1) et (2) est dans cet intervalle, soit croissante puis décroissante si la solution de l'équation (1) et la solution de l'équation (2) sont dans l'intervalle.
- $R_B(\lambda)$ est décroissante sur cet intervalle.

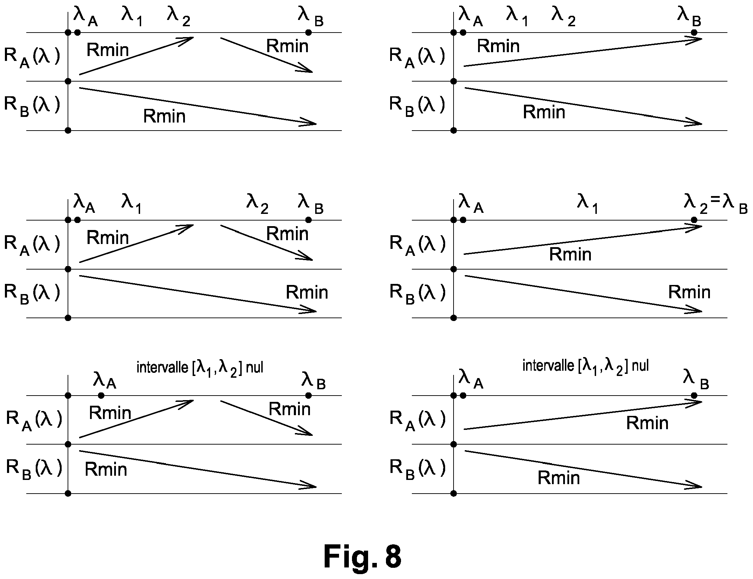

■ Les informations ci-dessus sont suffisantes pour définir un intervalle $]\lambda_1,\lambda_2]$ (éventuellement cet intervalle est nul ou ouvert si $\lambda_1 = \lambda_A$ ou $\lambda_2=\lambda_B$) pour lequel $R_A$ et $R_B$ sont admissibles pour le véhicule (c'est immédiat en traçant des tableaux de variation, voir exemples en Figure 8). Si cet intervalle est nul, le procédé de régénération d'une trajectoire selon l'invention passe à la solution présentée au point 3.3. Sinon, on choisit $\lambda$ pour la pose qI de manière à ce l'un des deux arcs de cercle soit de rayon le plus grand possible c'est-à-dire si $R_A(\lambda_2)>R_B(\lambda_1)$ on choisit $\lambda= \lambda_2$, sinon on choisit $\lambda= \lambda_1$. De manière alternative, une autre valeur de $\lambda$ peut être choisie dans l'intervalle $]\lambda_1,\lambda_2]$. Ces informations sont suffisantes pour définir les deux arcs de cercle de la trajectoire respectivement de rayon $R_A$ et $R_B$ et de longueurs $L_A$ et $L_B$.

■ ***Variante avec mi courbure continue, mi arc de cercle***
De manière alternative, si l'intervalle $[\lambda_1,\lambda_2]$ est non nul, le procédé de régénération d'une trajectoire selon l'invention détermine si l'un des deux arcs de cercle de la trajectoire crée peut être remplacé par une séquence CAC(A,L,0). L'arc de cercle qui pourrait être éventuellement remplacé est l'arc de cercle de rayon le plus grand parmi $R_A$ et $R_B$. Soit $R_X$ ce rayon le plus grand, qI et qX étant les poses associées (qX est soit qA, soit qB). Sont alors appliquées les formules de la partie 3.1 pour trouver la séquence CAC(A,L,0). Si $A^2/L \geq R_{min}$, cette séquence est admissible pour le véhicule.

■ Si un chemin admissible pour le véhicule (composé soit de deux arcs de cercle, soit d'un arc de cercle et d'une séquence CAC) est trouvé lors des étapes précédentes, la trajectoire ainsi créée est testée pour vérifier si elle est libre d'obstacle. Si c'est le cas, la régénération de la trajectoire est effectuée, sinon le procédé de régénération d'une trajectoire selon l'invention passe à la solution présentée au point 3.3 ci-après.

### 3.3 Autre solution

Si les solutions précédentes ne peuvent être appliquées, le procédé de régénération d'une trajectoire selon l'invention met en oeuvre la stratégie suivante.

Si le véhicule doit avancer, il avance en braquant le plus possible (à l'arrêt ou en mouvement selon la variante) vers l'intérieur de la place de parking considérée.

Si le véhicule doit reculer, il recule en braquant le plus possible (à l'arrêt ou en mouvement selon la variante) vers l'extérieur de la place de parking considérée.

Condition 1 : Dans les deux cas, le procédé de régénération d'une trajectoire selon l'invention vérifie par avance que cette manoeuvre n'amènera pas le véhicule dans une orientation inférieure à l'orientation finale souhaitée. Si c'était le cas, le procédé de régénération d'une trajectoire selon l'invention réduit l'angle de braquage jusqu'à ce que cette condition soit satisfaite.

### a) Variante avec courbure continue

Dans cette variante, le véhicule ne braque pas ses roues à l'arrêt et un chemin élémentaire est utilisé. Pour cela, le procédé de régénération d'une trajectoire selon l'invention détermine une séquence CAC(A,L,$\theta$) telle que, dans la pose finale pour le véhicule, il ne soit plus possible d'avancer (ou reculer suivant le cas) sans collision.

Cette séquence CAC est trouvée de la même façon que les séquences CAC décrites dans la partie 2 : tout d'abord un arc de cercle de rayon est trouvé d'angle total $\theta_{tot}$ (depuis la pose courante jusqu'à une pose la plus proche possible sans collision d'un obstacle) puis il est transformé en une séquence CAC (A,L,$\theta$). Le rayon de cet arc de cercle est cherché tel pour la séquence CAC le paramètre A soit calculé de la manière suivante :

- Soit $v_\delta$ la vitesse maximale désirée de rotation des roues
- Soit $v_{longi}$ la vitesse maximale désirée longitudinale du véhicule
- Soit $\delta_{max}$ l'angle des roues correspondant à $R_{min}$

$$t = \frac{\delta_{max}}{v_\delta}$$

- Alors le temps nécessaire pour       tourner les roues de 0 à $\delta_{max}$ est :
- Dans le cas la longueur minimale parcourue par le véhicule braquant ses roues de 0 à $\delta_{max}$ est $L_{min} = v_{longi}t$ et on en déduit le paramètre de la clothoïde :
  Et L vaut alors $A^2 = R_{min}L_{min}$ Lmin.

Certains angles $\theta_{tot}$ ne permettent pas de créer une séquence CAC(A,Lmin,$\theta$), dans ce cas, comme présenté dans l'article « H. Vorobieva, N. Minoiu-Enache, S. Glaser, S. Mammar "Geometric Continuous-Curvature Path Planning for Automatic Parallel Parking", Proc. of IEEE ICNSC, 2013, pp. 418-423», il est possible de transformer l'arc de cercle en une séquence CAC($A_{autre}$,$L_{autre}$,0). Le calcul des paramètres $A_{autre}$ et $L_{autre}$ sont fournis dans cet article et dépendent de $\theta_{tot}$.

Lorsqu'une trajectoire est trouvée, il est vérifié si la condition 1 est respectée. Si ce n'est pas le cas, le procédé de régénération d'une trajectoire selon l'invention recalcule une autre trajectoire avec un paramètre A plus grand (cela équivaut à augmenter $R_{min}$ dans le calcul de A).

### b) Variante avec arcs de cercle

Dans cette variante, le véhicule braque ses roues à l'arrêt avec le braquage maximal. Le véhicule décrira donc un arc de cercle de rayon $R_{min}$ et de centre situé sur l'axe de la voie arrière (à gauche de cet axe si le véhicule braque à gauche, et à droite si le véhicule braque à droite), depuis la pose courante du véhicule, jusqu'à une pose la plus proche possible sans collision d'un obstacle. Cette pose est facilement calculable par avance.

Si la condition 1 n'est pas satisfaite, le procédé de régénération d'une trajectoire selon l'invention recalcule un autre arc de cercle de rayon $R > R_{min}$ qui la satisfait.

### 4 Commande en angle de braquage

Une fois la trajectoire régénérée, elle est exécutée par le véhicule grâce à des commandes en angle de braquage et en vitesse longitudinale. Différentes méthodes de commande peuvent être effectuée, nous donnons ici un exemple de commande particulièrement adaptée et facile à mettre en place par rapport à la trajectoire calculée.

Consigne de vitesse longitudinale :

La trajectoire est divisée en différents tronçons : arcs de cercles et éventuellement lignes droites. Pour chacun de ces tronçon, on s'assure uniquement que le véhicule (en marche avant ou marche arrière selon le tronçon) accélère jusqu'à une certaine vitesse maximale désirée $v_{max}$, puis reste à cette vitesse, puis décélère jusqu'à atteindre la vitesse nulle lorsque la distance à parcourir lors de cette marche avant ou arrière est atteinte. Différentes techniques classiques peuvent être utilisées (par exemple une consigne de vitesse trapézoïdale), il ne s'agit pas de les détailler ici.

Consigne de l'angle de braquage $\delta$, en fonction de la distance parcourue d :

- Pour chaque séquence CAC(A,L,$\theta$) calculée (de longueur totale $2L + R_{min}*\theta$), on donne la consigne suivante :

$$\delta(d) = \begin{cases} k\left|\arctan(a/R_{1)}\right| & d \in \left[0, L\right] \\ k\left|\arctan(a/R_{\min})\right| & d \in \left[L, L + R_{\min} * \theta\right] \\ k\left|\arctan(a/R_{2)}\right| & d \in \left[L + R_{\min} * \theta, 2L + R_{\min} * \theta\right] \end{cases}$$

avec k=±1 en fonction du braquage droit ou gauche, a l'empattement du véhicule, $R_1 = A^2/d$ et $R_2 = A^2/(2L + R_{\min} * \theta - d)$.

- Pour chaque arc de cercle de rayon R et de longueur L, on donne la consigne suivante (le braquage des roues se fait donc à l'arrêt) :

$$\delta(d) = k\left|\arctan(a/R)\right| \qquad d \in \left[0, L\right]$$

avec k=±1 en fonction du braquage droit ou gauche et a l'empattement du véhicule.

Le procédé de régénération d'une trajectoire selon l'invention présenté ici concerne les manoeuvres de parking autonomes en créneau, manoeuvres particulièrement pénibles pour l'utilisateur, et en particulier les moyens de régénérer une trajectoire avec le véhicule déjà engagé dans la place de parking.

Le procédé de régénération d'une trajectoire selon l'invention présente les avantages suivants :

- La régénération de la trajectoire présentée permet de corriger la trajectoire du parking, si le véhicule s'est trop éloigné de la trajectoire initialement prévue.
- Cette régénération de trajectoire est effectuée avec une méthode nécessitant un coût de calcul réduit.
- Aucune optimisation n'est nécessaire et une solution est toujours trouvée.
- La nouvelle trajectoire peut avoir une courbure continue si nécessaire ou bien alterner avec des portions de trajectoire sans courbure continue (avec braquage des roues à l'arrêt), si cette option est permise.
- Le procédé de régénération d'une trajectoire selon l'invention peut également être utilisé pour garer un véhicule dont la pose initiale est avec le véhicule engagé en partie dans la place de parking.
- La trajectoire régénérée peut être effectuée avec des commandes simples de braquage

Bien entendu, il est possible d'apporter à l'invention de nombreuses modifications sans pour autant sortir du cadre de celle-ci.

## Revendications

1. Procédé de régénération d'une trajectoire entre une pose initiale réelle (qA) et une pose finale (qB) souhaitée lors d'une manoeuvre de parking automatique réalisée par un véhicule automobile, le procédé comportant des étapes de :

   ◦ Evaluation d'une erreur entre la pose initiale réelle (qA) et une pose initiale souhaitée.
   ◦ Si l'erreur précédemment évaluée est supérieure ou égale à une valeur seuil prédéterminée, calcul d'une trajectoire entre la position initiale réelle (qA) et la position finale souhaitée (qB) en déterminant au moins une séquence clothoïdale (CAC),

   **caractérisé en ce que**, lors du calcul de la trajectoire entre la position initiale réelle (qA) et la position finale souhaitée (qB) :
   ◦ si la pose initiale réelle (qA) et la pose finale souhaitée (qB) sont symétriques, une seule séquence clothoïdale est déterminée.

2. Procédé selon la revendication 1, **caractérisé en ce que**, lors du calcul de la trajectoire entre la position initiale réelle (qA) et la position finale souhaitée (qB) :
   ◦ si la pose initiale réelle (qA) et la pose finale souhaitée (qB) sont non symétriques, deux séquences clothoïdales sont déterminées.

3. Procédé selon la revendication 2, **caractérisé en ce que**, sur un ensemble de poses intermédiaires possibles comprises entre la position initiale réelle (qA) et la position finale souhaitée (qB), une pose intermédiaire admissible (qI) est déterminée telle que des braquages demandés soient inférieurs à un maximum possible du véhicule automobile sur les deux segments, de la pose initiale réelle (qA) à la pose intermédiaire admissible (qI) et de la pose intermédiaire admissible (qI) à la pose finale souhaitée (qB), de la trajectoire à calculer entre la position initiale réelle (qA) et la position finale souhaitée (qB).

4. Procédé selon la revendication 3, **caractérisé en ce que** la détermination de la pose intermédiaire admissible (qI) s'effectue par dichotomie en utilisant des intégrales de Fresnel.

5. Véhicule automobile comportant un calculateur, un système de commande automatique de braquage des roues directionnelles, de la boite de vitesse, des freins et de l'accélérateur, **caractérisé en ce qu'**il est agencé de sorte à mettre en oeuvre un procédé selon l'une des revendications 1 à 4.

**Patentansprüche**

1. Verfahren zur Regenerierung eines Fahrwegs zwischen einer realen Ausgangsposition (qA) und einer gewünschten Endposition (qB) bei einem von einem Kraftfahrzeug ausgeführten automatischen Parkmanöver, wobei das Verfahren folgende Schritte aufweist:

o Ermittlung eines Fehlers zwischen der realen Ausgangsposition (qA) und einer gewünschten Ausgangsposition,
◦ wenn der vorher ermittelte Fehler größer als ein oder gleich einem vorbestimmten Schwellwert ist, Berechnung eines Fahrwegs zwischen der realen Ausgangsposition (qA) und der gewünschten Endposition (qB), indem mindestens eine Klothoidensequenz (CAC) bestimmt wird,

**dadurch gekennzeichnet, dass** bei der Berechnung des Fahrwegs zwischen der realen Ausgangsposition (qA) und der gewünschten Endposition (qB):
◦ wenn die reale Ausgangsposition (qA) und die gewünschte Endposition (qB) symmetrisch sind, eine einzige Klothoidensequenz bestimmt wird.

2. Verfahren nach Anspruch 1, **dadurch gekennzeichnet, dass** bei der Berechnung des Fahrwegs zwischen der realen Ausgangsposition (qA) und der gewünschten Endposition (qB):
◦ wenn die reale Ausgangsposition (qA) und die gewünschte Endposition (qB) nicht symmetrisch sind, zwei Klothoidensequenzen bestimmt werden.

3. Verfahren nach Anspruch 2, **dadurch gekennzeichnet, dass** bei einer Einheit von möglichen Zwischenpositionen zwischen der realen Ausgangsposition (qA) und der gewünschten Endposition (qB) eine zulässige Zwischenposition (qI) so bestimmt wird, dass geforderte Lenkeinschläge geringer als ein mögliches Maximum des Kraftfahrzeugs in den zwei Segmenten von der realen Ausgangsposition (qA) zur zulässigen Zwischenposition (qI) und von der zulässigen Zwischenposition (qI) zur gewünschten Endposition (qB) des zu berechnenden Fahrwegs zwischen der realen Ausgangsposition (qA) und der gewünschten Endposition (qB) sind.

4. Verfahren nach Anspruch 3, **dadurch gekennzeichnet, dass** die Bestimmung der zulässigen Zwischenposition (qI) durch Dichotomie unter Verwendung von Fresnel-Integralen durchgeführt wird.

5. Kraftfahrzeug, das einen Rechner, ein automatisches Steuersystem des Lenkeinschlags der gelenkten Räder, des Getriebes, der Bremsen und des Gaspedals aufweist, **dadurch gekennzeichnet, dass** es so eingerichtet ist, dass es ein Verfahren nach einem der Ansprüche 1 bis 4 durchführt.

**Claims**

1. Method for regenerating a path between a real initial position (qA) and a desired end position (qB) in an automatic parking manoeuvre performed by a motor vehicle, the method including steps of:

◦ evaluating an error between the real initial position (qA) and a desired initial position,
◦ if the previously evaluated error is greater than or equal to a predetermined threshold value, calculating a path between the real initial position (qA) and the desired end position (qB) by determining at least one clothoid sequence (CAC),

**characterized in that**, when calculating the path between the real initial position (qA) and the desired end position (qB):

◦ if the real initial position (qA) and the desired end position (qB) are symmetrical, a single clothoid sequence is determined.

2. Method according to Claim 1, **characterized in that**, when calculating the path between the real initial position (qA) and the desired end position (qB):

◦ if the real initial position (qA) and the desired end position (qB) are not symmetrical, two clothoid sequences are determined.

3. Method according to Claim 2, **characterized in that**, out of a set of possible intermediate positions between the real initial position (qA) and the desired end position (qB), an admissible intermediate position (qI) is determined such that required steering actions are less than a maximum possible steering action of the motor vehicle over the two segments, from the real initial position (qA) to the admissible intermediate position (qI) and from the admissible intermediate position (qI) to the desired end position (qB), of the path to be calculated between the real initial position (qA) and the desired end position (qB).

4. Method according to Claim 3, **characterized in that** the admissible intermediate position (qI) is determined by dichotomy, using Fresnel integrals.

5. Motor vehicle including a computer, a system for automatically controlling steering of the directional wheels, the gearbox, the brakes and the accelerator, **characterized in that** it is designed to implement a method according to one of Claims 1 to 4.

pose initiale du véhicule

**Fig. 1**

CAC(A,L,Θ)

Rmin

**Fig. 2**

**Fig. 3**

**Fig. 4**

poses symétriques                              poses non symétriques

**Fig. 5**

**Fig. 6**

**Fig. 7**

Fig. 8

EP 3 174 775 B1

## RÉFÉRENCES CITÉES DANS LA DESCRIPTION

**Documents brevets cités dans la description**

- US 20070282503 A

- US 20130085637 A

**Littérature non-brevet citée dans la description**

- **H. VOROBIEVA ; N. MINOIU-ENACHE ; S. GLASER ; S. MAMMAR.** Geometric Continuous-Curvature Path Planning for Automatic Parallel Parking. *Proc. of IEEE ICNSC,* 2013, 418-423